Europäisches Patentamt

European Patent Office

Office européen des brevets

(11) Publication number: **0 246 761**
**A1**

## (12) EUROPEAN PATENT APPLICATION

(21) Application number: **87303671.9**

(22) Date of filing: **27.04.87**

(51) Int. Cl.⁴: **C01G 25/00**

(30) Priority: **14.05.86 US 863180**

(43) Date of publication of application:
**25.11.87 Bulletin 87/48**

(84) Designated Contracting States:
**DE FR GB**

(71) Applicant: **Corning Glass Works**
**Sullivan Park FR-212**
**Corning New York 14831(US)**

(72) Inventor: **Wise, Warren Murray**
**Buckingham 2D**
**Corning New York 14830(US)**

(74) Representative: **Smith, Sydney et al**
**Elkington and Fife High Holborn House 52/54**
**High Holborn**
**London WC1V 6SH(GB)**

(54) **Preparation of high purity zirconia and zirconia mixtures from zirconium carbonate.**

(57) A method of preparing high purity zirconia from zirconium carbonate is provided. Zirconium salts and optionally salts of zirconia-stabilizing metals such as yttrium, magnesium, and calcium, are precipitated in a controlled manner from homogeneous acidic solution. The precipitate is recovered, preferably formed into a powder, and calcined to provided zirconia or a mixture of zirconia with one or more other metal oxides. The zirconia materials prepared in this manner contain less than about 0.01% by weight of sodium oxide impurity.

EP 0 246 761 A1

# PREPARATION OF HIGH PURITY ZIRCONIA AND ZIRCONIA MIXTURES FROM ZIRCONIUM CARBONATE

This invention relates to a process for the preparation of zirconia from zirconium carbonate and more particularly to the preparation of zirconia by controlled precipitation through which impurities inherent therein are excluded from the zirconium product.

Zirconia is used in ceramic or refractory articles in a wide range of applications. Because of the sharp volume change undergone by zirconia during its monoclinic/tetragonal crystalline transformation, however, the use of unstabilized zirconia is generally limited to applications in which the zirconia articles are not exposed to temperature fluctuations through the range at which this transformation occurs. Certain stabilizing metallic oxides, such as yttria, calcia, and magnesia, have been added to zirconia to stabilize it, at least partially, in its cubic crystalline form to minimize the effects of this transformation, making it useful through a wide range of temperatures.

The raw material ores, minerals, or other substances from which commercial grade zirconia is produced normally contain extraneous materials which, if present even in minor amounts, can adversely affect the properties of final products of either stabilized or unstabilized zirconia. For example, zirconia prepared from zircon (zirconium silicate) can contain up to about 1-1.5% by weight silica, which can interfere with stabilization of the zirconia. A widely available commercial source of zirconia is zirconia carbonate, which is processed from zircon primarily for use in the paper industry. Although that processing lowers the free silica content of the resultant zirconium carbonate, it leaves sodium oxide ($Na_2O$) as an impurity in amounts of about 0.5% by weight. Although not necessarily harmful in the paper industry, the presence of $Na_2O$ in refractory zirconia products, generally in the form of sodium silicate, can result in flaws in the crystalline structure of both the stabilized and unstabilized zirconia forms. Accordingly, the zirconia produced for refractory purposes from either of these two sources must be further treated to remove the inherent impurities.

In the particular case of the use of zirconium carbonate, it is known that zirconia can be recovered by dissolving the carbonate in a highly acidic aqueous solution and adventitiously precipitating hydrated zirconia from the solution by the rapid addition of a base. The precipitate is in the form of a gel, however, with most of the original sodium oxide impurity present, and filtration and washing of the gel is difficult. The preparation of highly pure products by controlled precipitation of an insoluble salt from homogeneous solution has been practiced previously, and it is, in particular, known that zirconium can be precipitated as a non-gel salt of succinic acid at a pH of about 3-3.5. See, for example, Jain and Singhal, Current Science, Volume 32, page 66 (1963). However, it is not known to prepare refractory-grade zirconia, substantially free of $Na_2O$, from the controlled precipitation of a zirconium salt from a solution formed by direct dissolution of zirconium carbonate.

## SUMMARY OF THE INVENTION

The present invention provides a process for the preparation of zirconia. The process comprises providing an aqueous acidic solution having a pH not greater than about 1.0; dissolving zirconium carbonate and succinic acid in the solution; introducing at least about 1.5 moles of urea per mole of zirconium carbonate into the solution; heating the solution for a time sufficient to precipitate substantially all the zirconium in the form of a succinate; recovering the precipitated material; and calcining the material, thereby generating zirconia by the thermal removal of the organic moieties. The zirconia contains less than 0.01% by weight of sodium oxide impurity.

In preferred embodiments, the starting acidic solution further contains a salt of one or more zirconia-stabilizing metals, such as magnesium, calcium, or yttrium. The additional metal is precipitated from the same solution in the form of a succinate or oxalate, and the composite precipitate, therefore, contains not only the organic zirconia precursor by also that for another metal oxide; during the calcining step, the metallic oxides themselves are generated. In another preferred embodiment, the precipitate is dried and then formed into a powder as part of the recovery step, providing a zirconia powder or a particulate mixture of zirconia and a stabilizing metal oxide.

The process of this invention, therefore, provides a means for producing high purity zirconia from the abundant and relatively inexpensive zirconium carbonate. In the preferred embodiments, zirconia powders are produced which can be used directly in the further production of ceramic or refractory articles without the need for purification or other post-treatment. The zirconia powders can be co-produced with effective amounts of stabilizing metal oxides from a single homogeneous solution, eliminating the need to post-blend the desired metal oxides with pre-formed zirconia powder as has been commonly done in the past.

## DETAILED DESCRIPTION OF THE INVENTION

In the process of the invention, zirconium, having been introduced in the form of basic zirconium carbonate, is precipitated from an acidic solution in the form of a succinate which is generated slowly by a rate-controlled reaction. Broadly, the invention proceeds from an initial aqueous solution of a strong acid into which zirconium carbonate, succinic acid, and urea are introduced. The pH of the solution is adjusted initially to a value sufficiently low to keep all components dissolved. Upon the application of heat, the urea decomposes to ammonia, engendering a correspondingly slow increase in the pH. As the pH rises through the range of about 3-3.5, zirconium succinate precipitates slowly out of the solution, trapping few of the impurities, notably sodium oxide, originally present in the carbonate compound.

The starting aqueous solution is prepared by dissolving a strong acid in water, preferably distilled water, at a concentration sufficient to provide a pH of about 1.0 or below. Zirconium carbonate is then added at a weight concentration that is preferably no higher than about 10%, most preferably in the range of about 5-10%. With the exception of sulfuric acid, any suitably strong acid such as nitric, hydrochloric or acetic acid can be used in the starting solution. Sulfuric acid should be avoided because of the relative insolubility of zirconium carbonate therein. To the solution is then added succinic acid in at least equal molar amounts with the zirconium carbonate which has been added. Preferably, a molar ratio of at least 1.5:1 and most preferably at least 2.5:1 of succinic acid to zirconium carbonate is used.

Urea is added to the solution at ambient temperature and stirred until dissolved. At least about 1.5 moles, preferably 3.0 moles, of urea should be added per mole of zirconium carbonate to provide sufficient basicity for the formation of the precipitate. The solution is then heated to a temperature sufficient for thermal decomposition of the urea to take place. Preferably, the solution is heated to a gentle boil, optionally with reflux, and maintained at that condition until the urea is completely decomposed and the zirconium precipitated out of the solution. The precipitate is in the form of zirconium succinate or zirconyl succinate. Generally, 3-4 hours is sufficient for all or substantially all of the zirconium to come out of solution, but it is preferred to maintain the solution at reflux for a total of 5-7 hours to provide the highest zirconium recovery. The rate of precipitation is at least partially dependent upon the urea concentration, with higher concentrations normally elevating the pH more quickly to allow shorter reaction times.

At the completion of the precipitation, the solid residue is recovered by standard techniques. Specifically, the solution is filtered, preferably while still hot, and the solid material washed with a dilute electrolyte solution, such as dilute ammonium hydroxide. Optionally, the resultant filter cake can be suspended in distilled water and heated, followed by re-filtration and re-washing with electrolyte solution. The cake is preferably suction dried on the filter and then further dried in an oven at a temperature up to about 150°C.

Finally, the material is calcined, thereby removing the organic succinate moiety and generating the zirconia. Generally, conditions of 500-900°C for a period of 2-10 hours, preferably in an oxidizing atmosphere, are sufficient for the calcining step. Most preferably, the material is formed into a fine powder prior to calcining by, for example, pulverizing the dried cake, followed by grinding or milling. In either event, the zirconia produced in this manner contains less than about 0.01 weight percent sodium oxide, and generally less than about 0.007 weight percent. Sodium content can be detected by flame emission spectroscopy.

In preferred embodiments of the invention, other metal oxides are produced in conjunction with the zirconia by precipitation out of the same solution. Although many metal oxides can be co-produced with the zirconia, most useful are those oxides known to stabilize zirconia in its cubic form. Best known of these are yttrium oxide, magnesium oxide, and calcium oxide. The desired metal, or combination of metals, in the form of a salt, is introduced into the initial aqueous acidic solution with the zirconium carbonate. Generally, any salt can be used, but examples of preferred salts are nitrates, carbonates, chlorides, and acetates. Preferably, the metal is introduced as the salt of the same acid which is used to adjust the pH of the solution.

The amount of metal salt added to the zirconium solution is that which, after precipitation and calcining, will generate an amount of corresponding metal oxide, relative to the zirconia, sufficient to wholly or partially stabilize the zirconia. Zirconia is "wholly" or "partially" stabilized depending upon whether the amount of stabilizer is sufficient to form the cubic phase solid solution with all or part of the zirconia. For calcia, as little as 4 weight percent, based on the total calcia and zirconia weight, is sufficient to partially stabilize the zirconia and as much as 10 weight percent may be needed to fully stabilize it. For magnesia and yttria, those corresponding ranges are 3-21% by weight and 4-16% by weight, respectively. Calcium or magnesium salt is preferably added in a 5-10% excess of that which is otherwise calculated to provide the desired level of the corresponding oxide within the above stated ranges since these metal ions are usually not completely precipitated, some staying in solution in the form of magnesium in calcium succinate, which are soluble even at higher pH.

When the added stabilizing metal is yttrium, yttrium oxide will be ultimately generated upon calcining from its precursor precipitate, yttrium succinate. More specifically, yttrium is precipitated out of the solution in the form of a succinate when the pH reaches about 5.5. Accordingly, as the pH of the homogeneous solution of zirconium and yttrium salts rises as the urea is thermally decomposed, the zirconium will first begin to precipitate in the form of a succinate as the pH passes through the range of about 3-3.5, followed by precipitation of yttrium succinate as the pH reaches about 5.5. Generally, the earlier described quantities of urea and succinic acid which should be present in the solution prior to the heating step are sufficient to cause precipitation of the yttrium as well as the zirconium. However, when yttrium is present it is preferred for the initial solution to contain at least about 2.5 moles of urea and 2.5 moles of succinic acid for each mole of zirconium carbonate.

The precipitation of magnesium or calcium, as the optionally added stabilizing metal, is effected by introducing oxalic acid or an oxalic acid ester to the solution after the precipitation of the zirconium and that of any optionally present yttrium have taken place. The oxalic acid or ester is preferably introduced in at least a 50% molar excess relative to the magnesium or calcium salt present in the solution. It is to be understood that at the time the oxalic acid or its ester is to be introduced, the pH of the solution will have risen to at least 3.5, and accordingly any ester which is soluble at the system pH can be used. Examples are lower alkyl oxalates, such as dimethyloxylate, and ammonium oxalate. Magnesium oxalate and calcium oxalate begin to precipitate at a pH of about 4, and in systems containing no yttrium, the oxalic acid compound can be added to the solution when the pH reaches that level. When yttrium is present, however, the oxalic acid compound is preferably not added until the pH has been allowed to rise to about 5.5-6 to insure that substantially all the yttrium has first been precipitated. The oxalic acid compound is preferably added to the solution while it is still hot, but the solution can optionally be removed from the heat after its addition and the desired metal oxalate allowed to precipitate slowly as the solution cools.

Recovery of the precipitated material is effected in the same manner as described above.

The following examples are intended to be illustrative, but not limiting, of the claimed invention.

EXAMPLES

In each of the following examples, the zirconium carbonate was prepared and dissolved in nitric acid solution as described below. Identical 700-ml samples of this solution (the "starting zirconium solution") were used in each case:

A solution of 42g of reagent grade zirconium carbonate in 500 ml of water was placed in a 1-liter beaker. The contents were heated to boiling, and maintained at that condition for 10 minutes. The resultant slurry was filtered, with suction, through No. 42 filter paper in a Buchner funnel. The zirconium carbonate residue was washed three times with water followed by air-drying on the filter paper. The zirconium carbonate, 400 ml of water, and 35 ml of 16 M nitric acid solution were placed in a 1-liter beaker. The mixture was stirred with a magnetic stirring bar for 3-4 hours until all of the zirconium carbonate dissolved and only a faint cloudiness remained. The solution was filtered with suction through No. 42 paper, and the paper was washed three times with distilled water. The filtrate was diluted to 700 ml with additional distilled water in a 1-liter beaker, forming the starting zirconium solution.

EXAMPLE 1

Succinic acid, 23 grams, was added to the starting zirconium solution, and the resulting mixture stirred until all of the solid dissolved. Following this, 60g of urea was introduced, followed by further stirring to effect total dissolution. The beaker was covered with a watchglass and heated on a steam bath overnight to maintain the solution. The solution was then heated to a gentle boil and maintained at that condition for 4 hours, during which the volume of the solution was maintained at 800 ml by the periodic addition of distilled water. At the end of 4 hours, a substantial precipitate layer was noticeable. The mixture was allowed to cool to a temperature for safe handling and then filtered, with suction, through No. 40 paper in a Buckner funnel. The residue was washed 4 times with 100-ml portions of 0.08 M ammonia. The resulting filter cake was air-dried and then placed in an oven at 110°C overnight. The dried cake was ground with a mortar and pestle to pass 100-mesh screening, and the particles were then calcined at 900°C for about 2.5 hours. Flame emission spectroscopy determined that the calcined powders contained less than 0.007 weight percent sodium oxide.

## EXAMPLE 2

The procedure of Example I was repeated except that 7.08 gm of reagent grade $Y(NO_3)_3 \bullet (4\text{-}6)$-$H_2O$ were added to the 700-ml starting zirconium solution before the addition of the succinic acid and urea. Further following the procedure of Example I, the resultant calcined powders contained less than 0.007 weight percent sodium oxide, based on the zirconium oxide content.

## EXAMPLE 3

To the 700-ml starting zirconium solution were added 2.3g of hydrated $Ca(NO_3)_2 \bullet 4H_2O$ and 23 grams of succinic acid. Stirring was continued until the additives were completely dissolved, after which 60g of urea was added and stirred until complete dissolution. The beaker containing the solution was covered and put on a steam bath overnight, after which the beaker was transferred to a hot plate and the solution brought to a gentle boil and there maintained for 3 hours, during which time the volume was maintained at 800 ml by the periodic addition of distilled water. At the end of this time after a precipitate had formed, 80 ml of a 5%-by-weight solution of dimethyloxylate was added, with stirring, and the boiling was continued for 4 additional hours, during which time the volume was maintained at 800 ml with the periodic addition of distilled water. At the end of this time, the beaker was removed from the heat and the contents allowed to cool to room temperature, during which time additional precipitation was evident. The mixture was then filtered, with suction, through No. 40 paper in a Buchner funnel. The solid residue was washed four times with 100-ml portions of an ammonium and ammonium oxalate solution. The residue was then dried, ground, and calcined as described in Example I. Flame emission spectroscopy showed the calcined powder to contain less than 0.007% by weight sodium oxide, based on the zirconia content.

## EXAMPLE 4

To the 700-ml starting zirconium solution were added 34g of $Mg(NO_3)_2 \bullet 6H_2O$ and 23g of succinic acid. Stirring was continued until the additives were completely dissolved, and then 60g of urea were added and dissolved, with stirring. The beaker containing the solution was covered and placed on a steam bath overnight, after which the beaker was transferred to a hot plate and the solution brought to a gentle boil and there maintained for 7.5 hours, keeping the volume of the solution at 800 ml by the periodic addition of distilled water. At the end of this time, during which a significant precipitate had developed, the beaker was removed from the heat and 80 ml of warmed 10%-by-weight solution of $(NH_4)_2C_2O_4 \bullet H_2O$ was added with stirring. The mixture was allowed to cool to room temperature overnight, during which fine additional precipitation took place. The mixture was then filtered, with suction, through No. 40 filter paper in a Buchner funnel. The residue was washed four times with 100-ml portions of 0.08 $\underline{M}$ $NH_4OH$. The solid residue was dried, ground, and calcined as described in Example I. Flame emission spectroscopy showed the sodium oxide content to be less than 0.007% by weight, based on the zirconia content.

**Claims**

1. A process for the preparation of zirconia or a mixture of zirconia with at least one other metallic oxide comprising:

a) providing an aqueous acidic solution having a pH not greater than about I.0;

b) dissolving zirconium carbonate, succinic acid, and optionally a magnesium, calcium, or yttrium salt in said solution;

c) introducing at least I.5 moles of urea per mole of zirconium carbonate into said solution;

d) heating the solution for a time sufficient to precipitate substantially all the zirconium and said optionally present yttrium in the form of a succinate;

e) precipitating said optionally present magnesium or calcium by introducing into said heated solution oxalic acid or an oxalic acid ester in an amount sufficient to precipitate substantially all said magnesium or calcium in the form of an oxalate;

f) recovering the precipitated material of steps (d) and (e); and

g) calcining the material.

2. The process of claim I, in which a yttrium salt of nitric, hydrochloric, carbonic, or acetic acid is dissolved in the aqueous acidic solution and in which said introducing step is practiced with at least 2.5 moles of urea per mole of zirconium carbonate.

3. The process of claim I, in which a magnesium salt of nitric, hydrochloric, carbonic, or acetic acid is dissolved in the aqueous acidic solution and in which said introducing step is practiced with at least 2.5 moles of urea per mole of zirconium carbonate; and in which said precipitating step is practiced with an ester of oxalic acid.

4. The process of claim I, in which a calcium salt of nitric, hydrochloric, carbonic, or acetic acid is dissolved in the aqueous acidic solution, and in which said introducing step is practiced with at least 2.5 moles of urea per mole of zirconium carbonate, and in which said precipitating step is practiced with an ester of oxalic acid.

5. The process of claim I in which the aqueous acidic solution contains substantially no magnesium, calcium, or yttrium salts.

6. The process of any one of claims I-5, in which said recovering step includes forming the precipitated material into a powder.

7. Zirconia prepared according to the process of one of claims I-5, said zirconia containing less than about 0.01% by weight $Na_2O$.

8. A zirconia powder prepared according to the process of claim 6, said powder containing less than about 0.01% by weight $Na_2O$.

9. A mixture of zirconia and yttria magnesia, or calcia, prepared according to the process of any of claims I-4, said mixture containing less than about 0.01% by weight $Na_2O$.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 104, no. 18, May 1986, page 165, abstract no. 151792b, Columbus, Ohio, US; & JP-A-60 255 622 (TOYO SODA MFG. CO. LTD) 17-12-1985 * Whole abstract * | 1 | C 01 G  25/00 |
| A | CHEMICAL ABSTRACTS, vol. 99, no. 8, 1983, page 599, abstract no. 63186e, Columbus, Ohio, US; K. BILINSKI et al.: "Precipitation and complex formation of zirconium(IV) with malonic, succinic and adipic acids at 298 K", & CROAT. CHEM. ACTA 1983, 56(1), 53-9 * Whole abstract * | 1 | |

TECHNICAL FIELDS SEARCHED (Int. Cl.4)

C 01 G

The present search report has been drawn up for all claims

| Place of search | Date of completion of the search | Examiner |
|---|---|---|
| THE HAGUE | 25-08-1987 | LIBBERECHT-VERBEECK |